# DEMANDE DE BREVET EUROPEEN

(11) **EP 1 291 809 A1**
(43) Date de publication de la demande: **12.03.2003**
(21) Numéro de dépôt: 02354130.3
(22) Date de dépôt: 03.09.2002
(51) Int. Cl.: G06K 9/00

(54) **Procédé de comparaison d'empreintes digitales**

(30) Priorité: 04.09.2001 FR 0111434
(71) Demandeur: STMicroelectronics S.A., 92120 Montrouge (FR)
(72) Inventeur: Martin, Lionel, 13100 Aix en Provence (FR)
(74) Mandataire: de Beaumont, Michel

(57) **Abrégé**

L'invention concerne un procédé et système de comparaison d'un ensemble (CI) de minuties d'une image courante par rapport à un ensemble de minuties d'une image de référence, selon lequel on ordonne les minuties par leurs coordonnées cartésiennes dans le plan de l'image à partir d'un point d'origine prédéterminé, on recherche, dans l'ensemble de référence et dans l'ensemble courant, un chemin commun de minuties semblables, et on considère qu'il y a identité entre les deux images si le chemin commun comporte un nombre de segments supérieur à un premier seuil.

## Description

La présente invention concerne la reconnaissance d'empreintes digitales qui constitue une technique biométrique parfaitement éprouvée pour l'identification d'individus. L'invention concerne plus particulièrement un procédé et un système automatique d'authentification d'identité par reconnaissance d'empreintes digitales à partir d'une comparaison d'une empreinte courante par rapport à une ou plusieurs empreintes de référence mémorisées précédemment.

Par le passé, la reconnaissance d'empreintes digitales servait essentiellement d'élément de preuve et d'identification dans des affaires criminelles. Désormais, les empreintes digitales sont également utilisées comme moyen d'identification et d'authentification d'un individu dans du contrôle d'accès ou des systèmes d'authentification sécurisés.

La reconnaissance d'empreintes digitales s'effectue par un examen de l'arrangement des lignes papillaires qui forme des points caractéristiques nommés minuties. Il faut au moins 8 (généralement entre 8 et 17) de ces minuties de l'arrangement papillaire sans discordance entre deux empreintes pour qu'on les considère identiques.

On recense 13 types différents de minuties. Les 6 minuties les plus fréquentes sont la terminaison, le sillon indépendant, la branche, l'éperon, le lac et le croisement. D'un point de vue statistique, les minuties de type branche et terminaison sont majoritaires dans une empreinte digitale. C'est pourquoi, dans les processus automatiques de reconnaissance d'empreintes digitales, on examine essentiellement la concordance des minuties de type branche et terminaison.

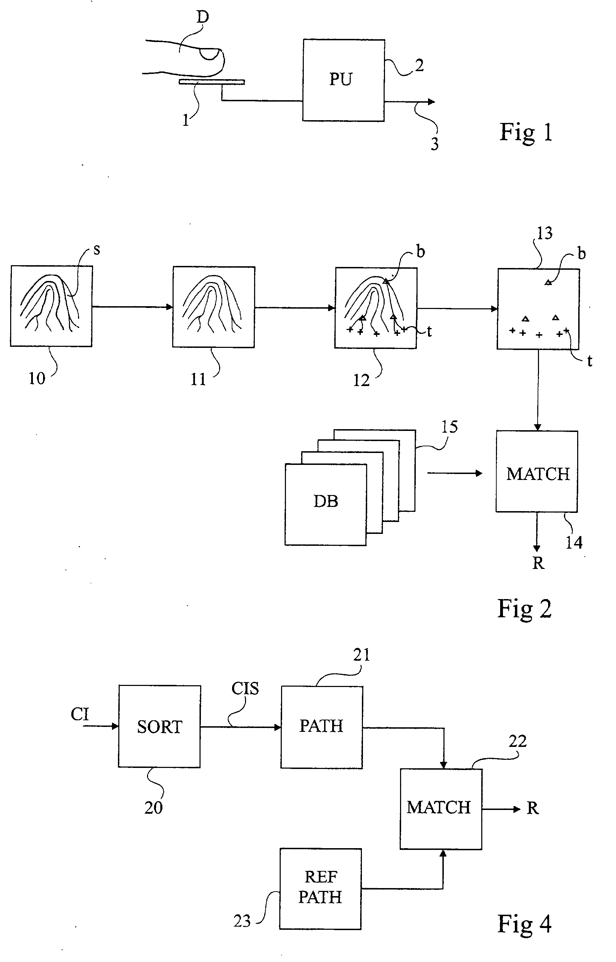

La figure 1 représente, de façon très schématique, un système automatique de reconnaissance d'empreintes digitales du type auquel s'applique la présente invention. Un tel système est essentiellement constitué d'un capteur 1 (constitué par exemple d'un dispositif optique de type numériseur) relié à une unité de traitement 2 (PU) chargée d'interpréter les résultats des mesures. L'unité 2 fournit, sur une liaison 3, un signal d'authentification ou de non-authentification d'un doigt D posé sur le capteur 1. L'unité de traitement 2 a généralement pour rôle de mettre en forme l'image graphique produite par le capteur 1 et d'analyser cette image pour la comparer à une ou plusieurs images contenues dans une base de données de référence.

La figure 2 illustre, sous forme de blocs, un exemple classique de procédé de reconnaissance d'empreintes du type auquel s'applique la présente invention. Le capteur 1 fournit une image graphique 10 dans laquelle les sillons s (monts et vallées) de l'arrangement papillaire sont représentés en niveaux de gris. L'unité de traitement 2 effectue alors un prétraitement numérique de l'image (le plus souvent un filtrage et une binarisation suivis d'un amincissement ou d'une squelétisation des sillons) pour obtenir une vue (bloc 11) exploitable pour l'extraction des minuties. Dans une étape suivante (bloc 12), on détermine la position des minuties au sein de l'image. En figure 2, ces minuties sont symbolisées par des triangles b quand il s'agit de branches et par des croix t quand il s'agit de terminaisons. La reconnaissance proprement dite s'effectue sur la base d'une cartographie 13 des minuties que l'on compare (bloc 14, MATCH) à une ou plusieurs cartographies de référence 15 contenues dans une base de données (DB). Le résultat R de la comparaison est fourni à l'application ayant requis l'authentification par empreintes digitales.

La présente invention concerne plus particulièrement la comparaison (bloc 14, MATCH) d'une cartographie de minuties courante par rapport à une cartographie de minuties de référence. L'obtention de cette cartographie et l'extraction des minuties est effectuée par n'importe quelle méthode connue. Parmi ces méthodes connues, on citera à titre d'exemple, la méthode décrite dans l'article "Minutia Matching Algorithm in Fingerprint Verification" de X. Luo, J. Tian et Y. Wu, paru en 2000 dans Proceedings of the International Conference on Pattern Recognition.

Une première méthode connue pour comparer une cartographie courante de minuties à une cartographie de référence consiste à sélectionner un point de la cartographie courante, puis à transformer la cartographie en coordonnées polaires de sorte que le point sélectionné devient le centre de l'image. On sélectionne ensuite un point de l'ensemble de référence et on transforme également cet ensemble en coordonnées polaires. On compare alors tous les modules et angles des différents points (minuties dans les deux espaces) pour déterminer d'éventuelles concordances.

Un premier inconvénient de cette méthode est que l'on doit sélectionner toutes les minuties de l'ensemble de référence en les prenant successivement pour origine afin de comparer la cartographie par rapport à celle de l'ensemble courant. Cela nécessite un grand nombre de comparaisons.

Un deuxième inconvénient est que le point sélectionné comme origine dans l'image courante peut ne pas être une minutie mais un artefact de l'image. On doit donc effectuer le grand nombre de comparaisons cité précédemment en prenant successivement tous les points de l'ensemble courant comme origine des coordonnées polaires pour être sûr qu'il n'y a pas concordance entre les deux empreintes digitales.

La première méthode ci-dessus permet d'interrompre le traitement algorithmique dès qu'une concordance d'un nombre suffisant de minuties est trouvée. Toutefois, celui-ci doit être poursuivi avec toutes les minuties pour être sûr qu'il n'y a pas concordance. Le temps requis est alors relativement long (de l'ordre de la seconde).

Une deuxième méthode connue consiste à appliquer une transformée dite de Hough généralisée afin d'examiner l'énergie nécessaire pour passer d'une cartographie de minuties à l'autre. Une telle méthode est décrite, par exemple, dans l'article "A real-time matching system for large fingerprint databases" de A.K. Jain, S. Shaoyun, K. Karu et N.K. Ratha, paru dans la revue IEEE Transactions on pattern analysis and machine intelligence, en août 1996 (Vol. 18, N° 8). La mise en oeuvre d'une telle méthode requiert beaucoup de calculs et prend encore plus de temps (plusieurs secondes) que la précédente.

La présente invention vise à proposer un nouveau procédé de reconnaissance d'empreintes digitales par comparaison de cartographies de minuties qui permette d'identifier plus rapidement qu'avec les méthodes classiques la concordance ou non de deux empreintes digitales.

L'invention vise également à minimiser les ressources utilisées pour l'exécution de l'algorithme.

L'invention vise également à minimiser la taille du programme nécessaire à la mise en oeuvre de l'algorithme.

L'invention vise également à limiter le nombre d'accès mémoire nécessaires lors de l'exécution de l'algorithme.

Les objectifs ci-dessus ont notamment pour but de permettre, dans une application préférée de l'invention, sa mise en oeuvre dans une carte à puce.

L'invention vise en outre à proposer un procédé et un système automatique de reconnaissance d'empreintes digitales mettant en oeuvre le même type d'algorithme que ce soit pour l'enregistrement d'une empreinte de référence ou pour l'identification d'une empreinte courante par rapport à cette empreinte de référence.

Pour atteindre ces objets et d'autres, la présente invention prévoit un procédé de comparaison d'un ensemble de minuties d'une image courante par rapport à un ensemble de minuties d'une image de référence, comprenant les étapes suivantes :
ordonner les minuties par leurs coordonnées cartésiennes dans le plan de l'image à partir d'un point d'origine prédéterminé ;
rechercher, dans l'ensemble de référence et dans l'ensemble courant, un chemin commun de minuties semblables ; et
considérer qu'il y a identité entre les deux images si le chemin commun comporte un nombre de segments supérieur à un premier seuil.

Selon un mode de mise en oeuvre de la présente invention, la recherche du chemin commun s'effectue, segment par segment, par coordonnées croissantes des minuties définissant les segments.

Selon un mode de mise en oeuvre de la présente invention, lorsque la recherche d'un nouveau segment d'un chemin commun est infructueuse, on reprend la recherche depuis le segment précédent, en ne tenant pas compte de la minutie ayant conduit à une recherche infructueuse.

Selon un mode de mise en oeuvre de la présente invention, on compare le nombre de fois où la recherche est reprise depuis un segment précédent par rapport à un seuil de régressions au-delà duquel on considère qu'il n'y a pas identité entre les images courante et de référence.

Selon un mode de mise en oeuvre de la présente invention, le seuil de régressions est fonction des nombres de minuties dans les ensembles courant et de référence.

Selon un mode de mise en oeuvre de la présente invention, le procédé comprend en outre les étapes suivantes :
sélectionner, dans l'ensemble courant et dans l'ensemble de référence, une première paire de minuties en partant de l'origine cartésienne des référentiels respectifs des deux images ;
comparer si les segments calculés sont identiques à la fois en orientation, en longueur et en type de minuties concernées ; et
dans l'affirmative, prendre cette première paire de minuties comme le démarrage d'un chemin et dans la négative passer à des paires de minuties suivantes.

Selon un mode de mise en oeuvre de la présente invention, pour déterminer un premier segment, on fixe un deuxième seuil de minuties examinées au-delà duquel on considère qu'il n'y a pas identité entre les images courante et de référence.

Selon un mode de mise en oeuvre de la présente invention, l'identité d'orientation et de longueur entre deux segments tient compte de tolérances prédéterminées dans les coordonnées cartésiennes.

Selon un mode de mise en oeuvre de la présente invention, la tolérance est, en orientation, de plus ou moins environ 10 degrés, de préférence, de plus ou moins environ 5 degrés.

Selon un mode de mise en oeuvre de la présente invention, la tolérance est, en translation, au maximum de plus ou moins environ un tiers de la taille de l'image dans la direction correspondant à la longueur du doigt, et au maximum de plus ou moins environ un quart de la taille de l'image dans la direction correspondant à la largeur du doigt.

Selon un mode de mise en oeuvre de la présente invention, le respect des tolérances est assuré par la conformation d'un capteur de prises d'empreintes digitales.

Selon un mode de mise en oeuvre de la présente invention, le premier seuil est fonction des nombres de minuties dans les ensembles courant et de référence.

L'invention prévoit également un système de reconnaissance d'empreintes digitales du type comprenant un capteur et une unité de traitement, le capteur étant conformé de façon à fixer une tolérance de positionnement d'un doigt à la fois en rotation et en translation par rapport au plan du capteur.

Selon un mode de réalisation de la présente invention, la conformation du capteur est obtenue par des butées latérales et longitudinales dans le positionnement du doigt.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1, décrite précédemment, représente de façon très schématique un système automatique de reconnaissance d'empreintes digitales du type auquel s'applique la présente invention ;
la figure 2, décrite précédemment, représente les étapes classiques d'un procédé de reconnaissance d'empreintes digitales du type auquel s'applique la présente invention ;
les figures 3A et 3B sont des vues d'arrangements papillaires à comparer ;
la figure 4 illustre, sous forme de schéma-blocs et de façon très schématique, un mode de mise en oeuvre du procédé de reconnaissance d'empreintes selon la présente invention ;
la figure 5 est un organigramme plus détaillé d'un mode de mise en oeuvre du procédé de comparaison des cartographies de minuties selon la présente invention ; et
les figures 6A et 6B illustrent la mise en oeuvre du procédé de l'invention sur les arrangements papillaires des figures 3A et 3B.

Les mêmes éléments ont été désignés par les mêmes références aux différentes figures. Pour des raisons de clarté, seules les étapes de procédé et les constituants du système qui sont nécessaires à la compréhension de l'invention ont été représentés aux figures et seront décrits par la suite. En particulier, les procédés et systèmes nécessaires à l'obtention des cartographies de minuties n'ont pas été détaillés et ne font pas l'objet de la présente invention. On pourra recourir à tout système classique.

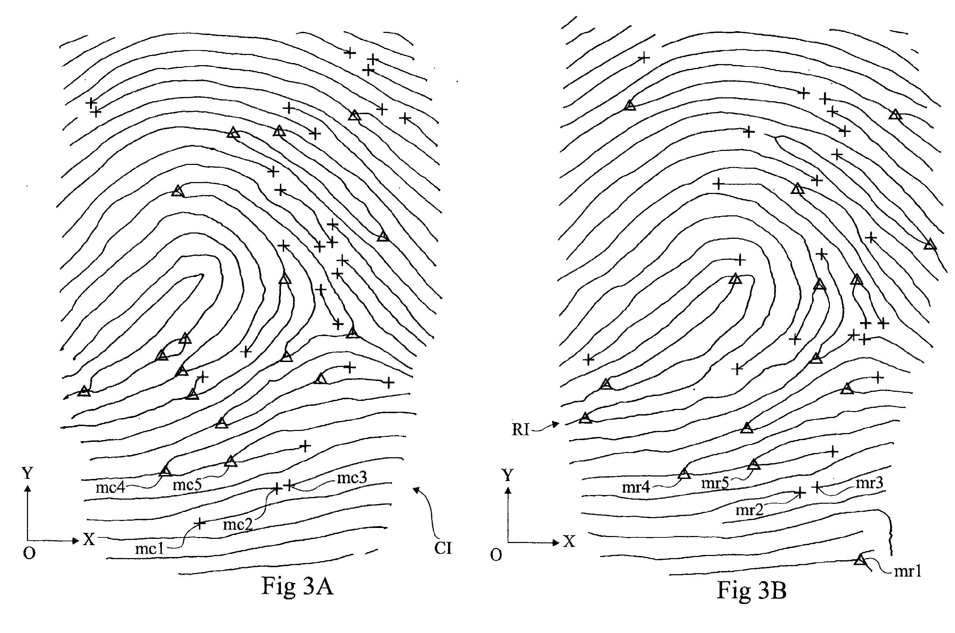

Les figures 3A et 3B représentent deux arrangements papillaires sur lesquels ont été indiquées les minuties extraites par un procédé automatique classique. Par exemple, la figure 3A représente une image courante CI que l'on souhaite comparer à une image de référence RI représentée par la figure 3B. Aux figures 3A et 3B, les minuties ont été symbolisées par des triangles quand il s'agit de branches et par des croix quand il s'agit de terminaisons. En observant ces figures, on remarque des discordances entre les minuties obtenues à partir des images des arrangements papillaires alors qu'il s'agit, dans cet exemple, de deux empreintes digitales identiques. Ces différences qui ne doivent pas conduire à considérer les empreintes digitales comme étant différentes peuvent provenir de différences de pression du doigt sur le capteur ou autres artefacts.

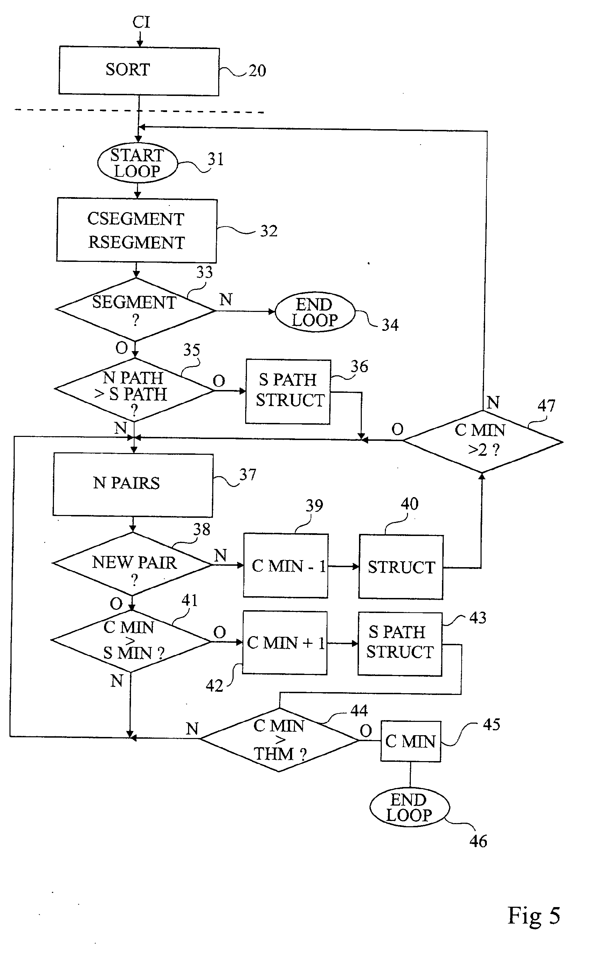

La figure 4 représente, sous forme de blocs, les étapes essentielles d'un mode de mise en oeuvre du procédé de comparaison de cartographies de minuties selon la présente invention.

Une caractéristique de l'invention est de commencer (bloc 20, SORT) par ordonner les minuties extraites d'une image représentant un arrangement papillaire. Pour chaque minutie de l'image courante CI, on stocke dans un tableau ou équivalent au moins les coordonnées cartésiennes (X, Y) dans l'image et le type de la minutie (branche ou terminaison) concernée. Ces données caractéristiques concernent les données minimales nécessaires pour la mise en oeuvre de l'invention. De préférence et comme on le verra par la suite, la comparaison sera affinée en tenant compte d'une caractéristique angulaire des minuties. Par conséquent, on stocke également dans le tableau susmentionné, et pour chaque minutie, l'angle du sillon (de la direction principale du sillon) comprenant la minutie par rapport à un des axes (généralement l'axe horizontal X) et/ou une autre donnée angulaire de la minutie. Dans le cas d'une minutie de type branche, on mémorise l'angle du segment du sillon le plus à l'écart des deux autres. Pour simplifier, on fera par la suite référence à l'angle d'une minutie pour désigner cette donnée angulaire qui correspond en fait à l'angle entre un sillon ou segment de sillon dont une extrémité est la minutie, et un axe du repère. D'autres caractéristiques des minuties pourront être stockées pour d'autres besoins éventuels.

Le classement de l'ensemble CI consiste à ordonner les minuties par abscisses et ordonnées croissantes depuis une origine arbitraire, mais fixe et prédéterminée. On obtient alors un ensemble trié CIS. Par exemple, l'origine des coordonnées cartésiennes est le coin inférieur gauche de l'image. En appliquant cet exemple à la figure 3A dans laquelle n minuties de type branche ou terminaison ont été repérées, la première minutie mc1 de l'image courante est une terminaison de même que les deuxième et troisième minuties mc2 et mc3. La quatrième minutie mc4 est une branche de même que la cinquième minutie mc5, et ainsi de suite jusqu'à la dernière minutie mcn qui est une terminaison.

L'ensemble de référence est classé de la même façon (avec la même origine et dans le même sens) que l'ensemble courant auquel il doit être comparé. Selon un premier mode de réalisation où ce sont les images numériques qui sont stockées dans la base de données, le classement est effectué juste avant la comparaison par rapport à l'ensemble courant. Selon un mode de réalisation préféré, les images de référence subissent le traitement de tri lors de leur mémorisation, de sorte que seule une table des minuties de référence, comprenant leurs coordonnées cartésiennes, angles (au sens de l'invention) et types, est mémorisée.

Pour l'image de référence RI de la figure 3B dans laquelle m minuties de type branche ou terminaison ont été repérées, la première minutie mr1 est une branche. Les deuxième et troisième minuties mr2 et mr3 sont des terminaisons, les quatrième et cinquième minuties mr4 et mr5 sont des branches, et ainsi de suite jusqu'à la dernière minutie mrm qui est une terminaison.

Une autre caractéristique de l'invention est que la comparaison de l'ensemble courant de minuties ordonnées CIS par rapport à un ensemble de référence s'effectue en comparant des chemins entre ces minuties dans les ensembles courant et de référence. En d'autres termes, le tri préparatoire effectué selon l'invention sert à comparer les minuties, paire par paire, (définissant ainsi des segments) et la succession de ces segments d'un ensemble de minuties à l'autre.

Selon l'invention, on recherche des chemins orientés, c'est-à-dire dans le sens de l'image qui correspond aux abscisses et ordonnées croissantes. Chaque chemin orienté est en fait constitué d'une série de vecteurs ou segments reliant les minuties deux à deux. Chaque chemin est caractérisé par l'ensemble des angles (aigus) formés par deux segments adjacents et par les longueurs des segments.

En figure 4, on a symbolisé la détermination d'un chemin (PATH) par un bloc 21 pour l'ensemble courant et la comparaison (bloc 22, MATCH) de ce chemin courant par rapport à un chemin de référence (bloc 23, REF PATH). On notera toutefois que, selon l'invention, la comparaison s'effectue segment par segment comme cela sera expliqué en relation avec la figure 5 ci-après.

Le recours à une comparaison de chemins minimise considérablement le nombre de calculs à effectuer. La contrepartie est la nécessité d'un tri (croissant ou décroissant) des minuties selon leurs coordonnées.

Selon la présente invention, la mise en oeuvre du procédé de comparaison requiert que les images à comparer soient sensiblement dans le même référentiel. En d'autres termes, le capteur d'un système de prises d'empreintes pour la mise en oeuvre du procédé de reconnaissance selon l'invention comporte des moyens de positionnement du doigt (par exemple, un guide pourvu d'une butée) permettant de s'assurer que le doigt de l'utilisateur est placé sensiblement dans la même position d'une prise à l'autre. La tolérance admise dans le positionnement dépend, comme on le verra par la suite, de la tolérance admise pour la différence de concordance entre deux minuties définissant un segment dans l'ensemble courant et dans l'ensemble de référence.

Selon un mode de réalisation préféré, la tolérance d'orientation de l'image est d'environ ± 10 degrés et est préférentiellement d'environ ± 5 degrés. La tolérance en translation est au maximum de plus ou moins environ 1/3 de la taille de l'image dans la longueur du doigt et de plus ou moins environ 1/4 de l'image dans la largeur du doigt. Par exemple, pour une image de 256*360 pixels où les 256 pixels correspondent à la largeur du doigt, la tolérance en translation est d'environ ± 120 pixels en longueur et d'environ ± 65 pixels en largeur.

La figure 5 représente, de façon plus détaillée, un mode de mise en oeuvre du procédé de reconnaissance selon l'invention. L'organigramme de la figure 5 prend pour exemple le traitement d'une image courante CI qui est ordonnée (bloc 20, SORT) en abscisses et en ordonnées croissantes depuis une origine telle qu'indiquée aux figures 3A et 3B. On suppose que l'image de référence a préalablement été ordonnée de la même façon.

Au début (bloc 31) de la boucle de comparaison (START LOOP), on initialise différents compteurs et variables qui ressortiront de la description ci-après. En particulier, l'invention requiert de mémoriser au moins les caractéristiques (au moins coordonnées et type) des minuties des ensembles courant et de référence, et les caractéristiques (nombre et numéro d'ordre des minuties dans les ensembles courant et de référence) d'un chemin en cours.

Dans une première étape 32 (Csegment, Rsegment), on cherche dans les deux ensembles un premier segment de deux minuties correspondant au moins aux contraintes de type et de distance. On fera référence par la suite à des segments ou à des paires de minuties ce qui revient au même, chaque segment étant défini par deux minuties d'extrémités. La recherche des segments du bloc 32 s'effectue depuis l'origine cartésienne des minuties. De préférence, on tient compte également de l'angle des minuties (angles respectifs entre les minuties concernées et l'axe horizontal) ou d'une autre caractéristique d'orientation (par exemple, l'orientation principale des sillons dans des blocs de l'image). La connaissance de "l'orientation" des minuties par rapport au repère simplifie le procédé de comparaison. En particulier, cela permet de s'affranchir d'une difficulté qui est que les origines des repères des deux images ne sont pas forcément identiques.

En sortie du bloc 32, on vérifie (bloc 33, SEGMENT ?) si un segment commun (même orientation et même longueur) a pu être trouvé. Dans la négative, on sort de la boucle de comparaison (bloc 34, END LOOP) de façon négative. Le résultat est que les empreintes sont différentes.

On voit donc que l'invention permet de constater une absence d'identité des empreintes sans qu'il soit nécessaire d'examiner toutes les minuties les unes par rapport aux autres. L'examen des chemins orientés permet, selon un mode de réalisation préféré, de fixer un seuil THL (de préférence, relatif par rapport au nombre total de minuties dans l'image ou par rapport à une somme pondérée des nombres de minuties des images courante et de référence) du nombre de minuties examinées pour déterminer le premier segment commun, au-delà duquel on sait que l'on ne trouvera pas de chemin commun suffisamment long, donc d'identité entre les empreintes. Le seuil THL définit une sortie négative (absence de concordance des empreintes) du procédé de comparaison de l'invention.

Si un segment commun a été trouvé, on considère que l'on a démarré un chemin identique dans les deux images. De façon optionnelle, on teste alors (bloc 35, NPATH > SPATH ?) si le nouveau chemin est bien, par ses coordonnées, au-delà d'un éventuel chemin précédemment stocké lors d'une boucle précédente. Dans l'affirmative (ou si le test 35 est omis), on met à jour le chemin stocké (bloc 36, SPATH, STRUCT), et on le considère comme constituant le chemin maximal.

Une fois cette mise à jour effectuée, on revient au même point que si le test 35 est négatif. Cela revient à chercher une nouvelle paire de minuties correspondant aux contraintes de type et de distance dans les deux ensembles. Cette étape est illustrée par le bloc 37 (NPAIRS). La recherche d'une nouvelle paire est sensiblement identique à la recherche des segments du bloc 32, mais de façon simplifiée, la première minutie du nouveau segment recherché correspondant à la dernière minutie mémorisée du chemin courant.

En sortie du bloc 37, on vérifie (bloc 38, NEW PAIR ?) qu'un segment commun a pu être trouvé.

Dans la négative, on décrémente (bloc 39, CMIN-1) le nombre de minuties appariées dans l'image courante et on met à jour (bloc 40, STRUCT) la structure mémorisée des paires appariées. Cette mise à jour a pour objet de permettre un éventuel retour en arrière dans le chemin courant en revenant à la paire de minuties précédente. En sortie du bloc 40 on vérifie (bloc 47, CMIN > 2 ?) que le chemin courant permette a priori de déterminer une identité entre les images.

Si le test 47 est positif, on revient à la recherche de nouvelles paires de minuties dans le même chemin (bloc 37), mais en repartant du segment précédent. Le retour en arrière, ou régression, prévu par l'invention dans le chemin courant permet de ne pas éliminer un chemin du seul fait qu'un segment retenu oriente le chemin courant dans une mauvaise direction (impasse). De préférence, on fixe un seuil THR du nombre de régressions pour tout l'algorithme de reconnaissance. Le test (non représenté) est alors effectué en sortie positive du bloc 47 et permet, si le seuil THR est dépassé, de sortir de la comparaison (bloc 46, ENDLOOP). Le seuil THR permet d'arrêter la recherche d'un chemin orienté commun et définit donc une sortie négative (absence de concordance des empreintes) au sens de l'invention.

Si le test 47 est négatif, on revient au bloc 31 de début de boucle pour démarrer un nouveau chemin à partir d'une paire de minuties de référence suivante.

Si le test 38 donne un résultat positif, on compare le nombre de minuties appariées CMIN au nombre de minuties SMIN stockées dans le chemin maximal (bloc 41, CMIN > SMIN ?). Si le nombre courant CMIN est supérieur au nombre SMIN, on incrémente le nombre de minuties courantes appariées (bloc 42, CMIN+1). On mémorise le chemin et on met à jour la structure mémorisée des chemins courant et maximal (bloc 43, SPATH, STRUCT). On compare alors le nombre de minuties CMIN stockées du chemin courant par rapport à un seuil THM (bloc 44, CMIN > THM ?). Le seuil THM correspond, de préférence, au nombre (par exemple compris entre 8 et 17) de minuties à partir duquel on considère des empreintes comme identiques. En variante, le seuil THM correspond au nombre de minuties appariées trouvées, rapporté à une somme pondérée des minuties totales des images courante et de référence. Le seuil THM définit une sortie positive du procédé de comparaison de l'invention. Si le nombre CMIN est inférieur ou égal au seuil THM, on revient à la recherche d'une nouvelle paire de minuties (bloc 37). Si le nombre CMIN est supérieur au seuil THM, on extrait le nombre de minuties appariées total (bloc 45, CMIN) et on termine la boucle (bloc 46, END LOOP). Le nombre de minuties total appariées définit alors la longueur des chemins identiques trouvés. On reprend alors un processus classique d'exploitation des résultats de l'authentification.

Si le nombre CMIN est inférieur ou égal au nombre SMIN, cela signifie que le nouveau chemin comporte moins de minuties appariées à cet instant de la comparaison. On ne met donc pas à jour la structure mémorisée des chemins et on retourne à l'étape 37.

On décrira ci-après, de façon plus détaillée, un exemple particulier de mise en oeuvre de l'algorithme de comparaison illustré par la figure 5.

Selon cet exemple particulier, le bloc 32 comprend les étapes suivantes :
a) on sélectionne, dans l'ensemble de référence, la première minutie libre (non déjà sélectionnée précédemment comme première minutie d'un segment comme cela sera mieux compris par la suite) pour définir un premier point d'un segment de référence - s'il n'y a plus de minutie libre dans l'ensemble de référence, on sort du bloc 32 sans avoir déterminé de segment ;
b) on sélectionne, dans l'ensemble de référence, la minutie libre suivante (non déjà sélectionnée comme deuxième minutie avec la première minutie sélectionnée en a)), de façon à former le segment de référence, et on calcule alors les distances DRefX et DRefY en abscisse et en ordonnée entre ces deux minuties - s'il n'y a plus de minutie libre dans l'ensemble de référence, on sort du bloc 32 sans avoir déterminé de segment (En variante, on fixe un seuil THL de minuties restantes en deçà duquel il n'est pas nécessaire de poursuivre) ;
c) on sélectionne, dans l'ensemble courant, une première minutie libre pour définir le premier point du segment recherché dans l'image courante, et on compare le type de cette première minutie à celui de la première minutie du segment de référence - s'il n'y a plus de minutie libre, on retourne à l'étape a) pour sélectionner la minutie suivante de l'ensemble de référence ;
d) si les premières minuties ne sont pas de même type, on retourne à l'étape c) pour sélectionner la minutie suivante en tant que première minutie courante du segment recherché, si les premières minuties sont de même type, on calcule la différence entre les angles respectifs des minuties ;
e) on compare cette différence angulaire par rapport à un seuil angulaire prédéterminé, fixé en fonction de la précision de détermination souhaitée - si la différence angulaire est supérieure au seuil, on retourne à l'étape c) pour sélectionner la minutie suivante, sinon :
f) on extrait la minutie suivante de l'ensemble courant pour rechercher le deuxième point du segment de l'image courante, et on compare le type de cette deuxième minutie à celui de la deuxième minutie du segment sélectionné dans l'ensemble de référence - s'il n'y a plus de minutie suivante, on retourne à l'étape c) pour changer la première minutie courante ;
g) si les deuxièmes minuties ne sont pas de même type, on retourne à l'étape f) pour sélectionner la minutie suivante en tant que deuxième minutie courante du segment recherché, si les deuxièmes minuties sont de même type, on calcule la différence angulaire des deuxièmes minuties courante et de référence ;
h) on compare 1a différence angulaire par rapport au seuil angulaire prédéterminé - si la différence angulaire est supérieure au seuil, on retourne à l'étape f) pour sélectionner la minutie suivante de l'image courante, sinon on calcule les distances DImaX et DImaY en abscisse et en ordonnée entre les deux minuties de l'ensemble courant ;
i) on compare les différences DiffDX et DiffDY entre les distances respectives en abscisses DRefX, DImaX et en ordonnées DRefY, DImaY des deux paires de minuties par rapport à des seuils d'écart en abscisse et en ordonnée qui peuvent être identiques - si une des différences DiffDX et DiffDY est supérieure au seuil correspondant, on retourne à l'étape f) pour sélectionner la minutie suivante, si les différences DiffDX et DiffDY sont toutes deux inférieures aux seuils correspondants, on considère que l'on a trouvé un premier segment commun au deux cartographies ; et
j) on mémorise les minuties appariées, c'est-à-dire, leurs numéros d'ordres respectifs et on positionne un bit de validation (drapeau) SEGMENT de l'existence d'un premier segment commun.

Les seuils d'écarts définissent, avec le seuil angulaire, des coefficients d'élasticité permettant d'autoriser une tolérance sur des modifications de prises d'empreintes en orientation et en translation. De préférence, les seuils d'écarts tiennent compte de la taille du segment considéré (par exemple de la taille du segment de l'ensemble de référence) et sont donc relatifs.

En prenant l'exemple des figures 3A et 3B, la mise en oeuvre des étapes a) à j) ci-dessus conduit, pour déterminer le premier segment commun constitué par les minuties mc2, mc3 dans l'image courante et par les minuties mr2 et mr3 dans l'image de référence, à la succession d'étapes suivante : a(mr1), b(mr2), c(mc1, mr1), d(mc1, mr1), c(mc2, mr1), d(mc2, mr1), c(mc3, mr1), d(mc3, mr1), c(mc4, mr1), d(mc4, mr1), e(mc4, mr1), c(mc5, mr1), d(mc5, mr1), e(mc5, mr1), ..., c(mcn, mr1), d(mcn, mr1), a(mr2), b(mr3), c(mc1, mr2), d(mc1, mr2), e(mc1, mr2), c(mc2, mr2), d(mc2, mr2) e(mc2, mr2), f(mc3, mr3), g(mc3, mr3), h(mc3, mr3), i(mc2, mc3 ; mr2, mr3), j(mc2, mc3 ; mr2, mr3).

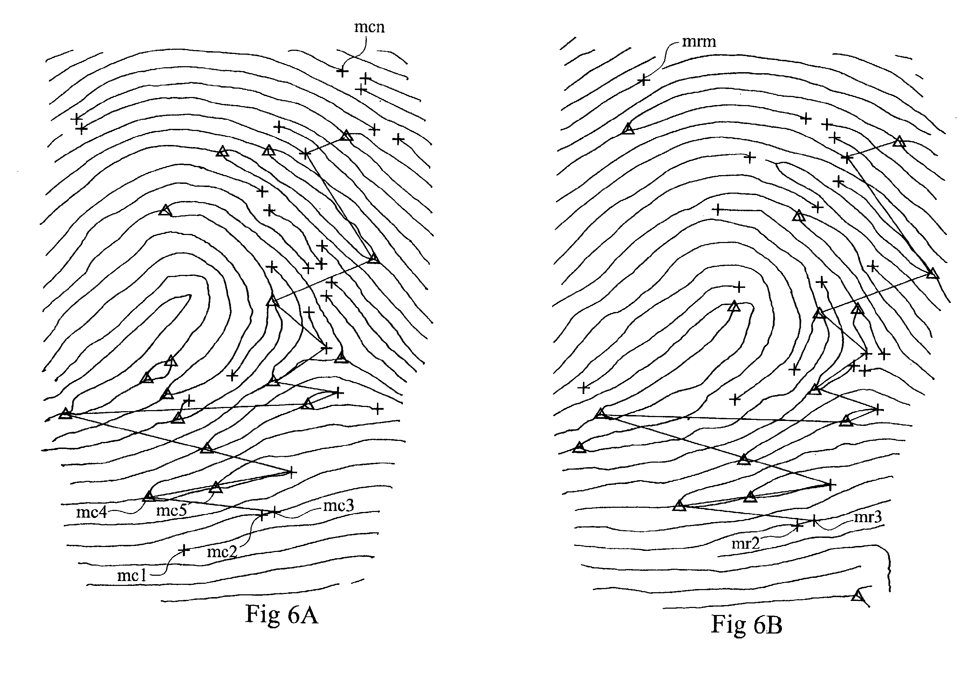

Les figures 6A et 6B reproduisent, avec le tracé du chemin commun de segments entre les deux empreintes, les empreintes des figures 3A et 3B.

Les blocs 33 à 36 comprennent les étapes suivantes :
k) on vérifie que le bit de validation SEGMENT est dans un état (par exemple, haut) indicateur de l'existence d'un chemin commun - si ce n'est pas le cas, on sort de la boucle de comparaison, sinon :
l) si le segment déterminé est le premier du chemin, on initialise à 2 la valeur d'un compteur CMIN de minuties appariées dans les deux images et on mémorise les numéros d'ordre des minuties appariées des deux ensembles dans deux fichiers ExtractC et ExtractR respectivement affectées aux ensembles courant et de référence et on passe à l'étape suivante, sinon on vérifie que le segment déterminé est bien à la suite du segment précédent constitutif du chemin commun (par exemple, en vérifiant que les numéros d'ordre respectifs des premières minuties des segments correspondent aux numéros d'ordre respectifs des dernières minuties contenues dans les fichiers ExtractC et ExtractR) - si ce n'est pas le cas, cela signifie une erreur dans l'exécution du programme et on sort de la fonction, sinon :
m) on passe à la recherche d'une paire de minuties suivante en sortant du bloc 35.

Le bloc 37 comprend les étapes suivantes :
n) on extrait, des ensembles courant et de référence, les informations (coordonnées, type et angle) des dernières minuties des chemins mémorisés dans les fichiers ExtractC et ExtractR ;
o) on sélectionne, dans l'ensemble de référence, la minutie libre suivante, de façon à former un segment de référence - s'il n'y a plus de minutie libre dans l'ensemble de référence, on sort du bloc 37 sans avoir déterminé de nouveau segment ;
p) on extrait, dans l'ensemble courant, la minutie suivante pour rechercher le deuxième point du segment de l'image courante, et on compare le type de cette deuxième minutie à celui de la deuxième minutie sélectionnée à l'étape o) - s'il n'y a plus de minutie suivante, on retourne à l'étape o) pour changer la deuxième minutie de référence ;
q) si les deuxièmes minuties ne sont pas de même type, on retourne à l'étape p) pour sélectionner la minutie suivante de l'image courante en tant que deuxième minutie courante du segment recherché, si les deuxièmes minuties sont de même type, on calcule la différence angulaire entre les deuxièmes minuties courante et de référence ;
r) on compare la différence angulaire par rapport au seuil angulaire - si la différence angulaire est supérieure au seuil, on retourne à l'étape p) pour sélectionner la minutie suivante, sinon :
s) on calcule les distances DRefX et DRefY, DImaX et DImaY et on compare les différences DiffDX et DiffDY par rapport aux seuils d'écart en abscisse et en ordonnée - si une des différences DiffDX et DiffDY est supérieure au seuil correspondant, on retourne à l'étape p) pour sélectionner la minutie suivante, si les différences DiffDX et DiffDY sont toutes deux inférieures aux seuils correspondants, on considère que l'on a trouvé un nouveau segment commun au deux cartographies ; et
t) on mémorise les minuties appariées et on positionne un bit de validation (drapeau) NEWPAIR de l'existence d'une nouvelle paire commune.
   En prenant l'exemple des figures 3A et 3B, la mise en oeuvre des étapes n à t ci-dessus conduit, pour déterminer le deuxième segment commun constitué par les minuties mc3, mc4 dans l'image courante et par les minuties mr3 et mr4 dans l'image de référence, à la succession d'étapes suivante : n(mc3, mr3), o(mr4), p(mc4, mr4), q(mc4, mr4), r(mc3, mc4 ; mr3, mr4), s(mc3, mc4 ; mr3, mr4), t(mc3, mc4 ; mr3, mr4).

Les blocs 38 à 47 comprennent les étapes suivantes :
u) on vérifie que le bit de validation NEWPAIR indique l'existence d'une nouvelle paire de minuties communes.

Dans la négative (blocs 39, 40, 47) :
v) on compare le nombre de régressions du chemin courant au seuil prédéterminé THR au-delà duquel on arrête la reconnaissance, sinon :
   w) on décrémente le compteur CMIN de minuties appariées dans le chemin courant, et on incrémente le nombre de régressions du chemin courant ; et
   x) on vérifie si le nombre de minuties du compteur CMIN est supérieur à 2, c'est-à-dire que la régression ne conduit pas à revenir à l'origine du chemin - Dans la négative, on recommence la recherche d'une nouvelle paire (étape n) après avoir supprimé les références de la paire courante du chemin, sinon, on revient à l'étape a) (avec les initialisations nécessaires).

Dans l'affirmative (blocs 41, 42, 43, 44, 45) :
y) on compare le nombre de minuties du chemin courant au nombre de minuties du chemin maximal mémorisé - si le nombre de minuties courantes est supérieur, on incrémente le compteur de minuties appariées du chemin et on réitère les opérations de mémorisation de l'étape 1) avec le segment trouvé ; et
z) on compare le nombre de minuties appariées à un seuil THM - si ce nombre est supérieur au seuil, on fournit le résultat sous la forme du nombre de minuties communes, sinon, on retourne à l'étape n) pour rechercher une nouvelle paire.

Les paramétrages nécessaires à la mise en oeuvre du procédé de l'invention sont essentiellement de définir des seuils de prise en compte des minuties voisines, c'est-à-dire des coefficients d'élasticité permettant d'autoriser une tolérance sur des modifications de prises d'empreintes (différence de pression ou de légers décalages dans la position du doigt). On définit également des seuils de sortie (d'arrêt) du procédé d'authentification à la fois positif et négatif dans le résultat d'authentification. Plus précisément, le procédé de l'invention permet de définir non seulement un seuil de comparaison THM au-delà duquel on est sûr que les empreintes sont identiques mais également au moins un seuil de comparaison THL et/ou THR en deçà duquel on sait que l'on ne trouvera pas d'identité entre les deux empreintes. On peut alors arrêter l'examen de comparaison sans être obligé d'examiner toutes les paires de minuties.

La création d'un fichier de référence est effectuée préférentiellement en comparant successivement plusieurs prises de la même empreinte afin de prendre des valeurs moyennes pour les coordonnées classées des différentes minuties. Le nombre d'empreintes examinées pour créer l'image de référence est compris entre 2 et 10 et est de préférence 3.

Selon un mode de mise en oeuvre préféré de l'invention, le paramétrage du seuil minimal de minuties appariées n'est pas un nombre prédéterminé mais correspond à un pourcentage du nombre de minuties de l'image de référence.

Un avantage de la présente invention est que le procédé est particulièrement rapide pour déterminer l'identité entre deux empreintes digitales. Cette rapidité est notamment fournie par le fait que l'on peut sortir de l'algorithme que ce soit de façon positive ou négative.

Un autre avantage de l'invention est que sa mise en oeuvre est moins gourmande en terme de ressources programme et ressources mémoire que des procédés classiques.

Un autre avantage de l'invention est que le procédé est paramétrable facilement en fonction du niveau de sécurité choisi.

Bien entendu, la présente invention est susceptible de diverses variantes et modifications qui apparaîtront à l'homme de l'art. En particulier, la mise en oeuvre de l'algorithme de l'invention par des moyens informatiques classiques est à la portée de l'homme du métier à partir des indications fonctionnelles données ci-dessus et en tenant compte de l'application, des ressources disponibles et des seuils choisis pour les différents tests.

De plus, la réalisation d'un capteur adapté à la mise en oeuvre de l'invention est également à la portée de l'homme du métier à partir des indications fonctionnelles données ci-dessus. On notera cependant que l'invention est compatible avec la réalisation d'un capteur sous forme de cartes à puce.

Enfin, l'invention a été décrite en supposant des images d'empreintes ayant des échelles identiques. L'invention s'applique toutefois également à des empreintes ayant des échelles différentes. On pourra soit ramener les deux empreintes à la même échelle avant l'exécution du procédé, soit tenir compte du rapport d'échelle dans les comparaisons de distances (le rapport d'échelle ne modifie pas les angles des minuties). Les adaptations du procédé permettant de traiter des empreintes ayant des échelles différentes sont à la portée de l'homme du métier.

## Revendications

1. Procédé de comparaison d'un ensemble (CI) de minuties d'une image courante par rapport à un ensemble de minuties d'une image de référence (RI), **caractérisé en ce qu'**il comprend les étapes suivantes :
ordonner les minuties par leurs coordonnées cartésiennes dans le plan de l'image à partir d'un point d'origine prédéterminé ;
rechercher, dans l'ensemble de référence et dans l'ensemble courant, un chemin commun de minuties semblables ; et
considérer qu'il y a identité entre les deux images si le chemin commun comporte un nombre de segments supérieur à un premier seuil (THM).

2. Procédé selon la revendication 1, **caractérisé en ce que** la recherche du chemin commun s'effectue, segment par segment, par coordonnées croissantes des minuties définissant les segments.

3. Procédé selon la revendication 2, **caractérisé en ce que**, lorsque la recherche d'un nouveau segment d'un chemin commun est infructueuse, on reprend la recherche depuis le segment précédent, en ne tenant pas compte de la minutie ayant conduit à une recherche infructueuse.

4. Procédé selon la revendication 3, **caractérisé en ce qu'**il consiste à comparer le nombre de fois où la recherche est reprise depuis un segment précédent par rapport à un seuil de régressions (THR) au-delà duquel on considère qu'il n'y a pas identité entre les images courante et de référence.

5. Procédé selon la revendication 4, **caractérisé en ce que** le seuil de régressions (THR) est fonction des nombres de minuties dans les ensembles courant et de référence.

6. Procédé selon l'une quelconque des revendications 1 à 5, **caractérisé en ce qu'**il comprend en outre les étapes suivantes :
sélectionner, dans l'ensemble courant (CI) et dans l'ensemble de référence (CR), une première paire de minuties en partant de l'origine cartésienne des référentiels respectifs des deux images ;
comparer si les segments calculés sont identiques à la fois en orientation, en longueur et en type de minuties concernées ; et
dans l'affirmative, prendre cette première paire de minuties comme le démarrage d'un chemin et dans la négative passer à des paires de minuties suivantes.

7. Procédé selon la revendication 6, **caractérisé en ce que**, pour déterminer un premier segment, on fixe un deuxième seuil (THL) de minuties examinées au-delà duquel on considère qu'il n'y a pas identité entre les images courante et de référence.

8. Procédé selon la revendication 6 ou 7, **caractérisé en ce que** l'identité d'orientation et de longueur entre deux segments tient compte de tolérances prédéterminées dans les coordonnées cartésiennes.

9. Procédé selon la revendication 8, **caractérisé en ce que** la tolérance est, en orientation, de plus ou moins environ 10 degrés, de préférence, de plus ou moins environ 5 degrés.

10. Procédé selon la revendication 8 ou 9, **caractérisé en ce que** la tolérance est, en translation, au maximum de plus ou moins environ un tiers de la taille de l'image dans la direction correspondant à la longueur du doigt, et au maximum de plus ou moins environ un quart de la taille de l'image dans la direction correspondant à la largeur du doigt.

11. Procédé selon l'une quelconque des revendications 8 à 10, **caractérisé en ce que** le respect des tolérances est assuré par la conformation d'un capteur (1) de prises d'empreintes digitales.

12. Procédé selon l'une quelconque des revendications 1 à 11, **caractérisé en ce que** le premier seuil (THM) est fonction des nombres de minuties dans les ensembles courant et de référence.

13. Système de reconnaissance d'empreintes digitales du type comprenant un capteur (1) et une unité de traitement (2), **caractérisé en ce que** le capteur est conformé de façon à fixer une tolérance de positionnement d'un doigt à la fois en rotation et en translation par rapport au plan du capteur.

14. Système selon la revendication 13, **caractérisé en ce que** la conformation du capteur est obtenue par des butées latérales et longitudinales dans le positionnement du doigt.

15. Système selon la revendication 13 ou 14, **caractérisé en ce que** l'unité de traitement (2) comprend des moyens pour la mise en oeuvre du procédé selon l'une quelconque des revendications 1 à 12.
